# EUROPÄISCHE PATENTSCHRIFT

(11) **EP 1 607 120 B1**
(45) Veröffentlichungstag und Bekanntmachung des Hinweises auf die Patenterteilung: **10.11.2010**
(21) Anmeldenummer: 05105349.4
(22) Anmeldetag: 17.06.2005
(51) Int. Cl.: A62C 2/06, A62C 2/18, F16L 5/04

(54) **Vorrichtung zur Abschottung eines Leitungsstrangs**
Apparatus for isolating a conduit
Dispositif pour l'isolement d'une canalisation

(30) Priorität: 17.06.2004 DE 102004029276
(43) Veröffentlichungstag der Anmeldung: 21.12.2005
(73) Patentinhaber: HILTI Aktiengesellschaft, 9494 Schaan (LI)
(72) Erfinder: Förg, Christian, 86862 Dillishausen (DE); Monden, Thomas, 87778 Stetten (DE); Wörsdörfer, Udo, 86899 Landsberg (DE); Paetow, Mario, 86859 Igling (DE)
(74) Vertreter: Wildi, Roland

(56) Entgegenhaltungen:
- EP-A- 0 253 791
- DE-U1- 20 209 337
- FR-A- 2 607 017
- US-A- 4 449 589

## Beschreibung

Die Erfindung betrifft eine Vorrichtung zur Abschottung eines Leitungsstrangs, der im Oberbegriff von Patentanspruch 1 genannten Art. Derartige Vorrichtungen dienen dem Abdrücken und Verschliessen von, durch Wände oder Decken hindurchgeführten Rohrleitungen oder Kabelkanälen im Brandfall. Derartige Leitungsstränge bestehen dabei insbesondere aus Kunststoff oder einem anderen, im Brandfall nachgiebigen oder weichen Material.

Aus der US 5 257 641 ist eine Brandschutzvorrichtung bekannt, die ein, in einem Gehäuse geführtes Schneideelement aufweist, das über ein Vortriebsmittel im Brandfall durch eine Kunststoffrohrleitung hindurch getrieben wird. Das Schneidelement ist dabei an einem Schieber angeordnet der die Rohrleitung verschliesst. Das Vortriebsmittel kann z. B. ein intumeszierendes Material oder ein Federelement sein. Das Gehäuse ist zweiteilig ausgebildet und umgibt die Kunststoffrohrleitung im montierten Zustand. Das Gehäuse weist dazu einen kreisförmigen Durchbruch bzw. eine Aufnahme auf, an dem der Schieber mit dem Schneidelement im Ausgangszustand seitlich angeordnet ist. Der dem Schieber gegenüberliegende Gehäuseteil definiert dabei den maximalen Ausfahrweg des Schiebers.

Von Nachteil bei dieser Brandschutzvorrichtung ist, dass sie nur an einer Leitung angeordnet werden kann, die eine Wand im Abstand zu einer, zu dieser Leitung parallelen zweiten Wand oder Decke durchsetzt, da ein rückwärtiger Bauraum für das zweite Gehäuseteil vorhanden sein muss.

Aus der FR 2 607 017 A1 ist ein Verschluss aus Stahl zur Abschottung eines durch einen Fußboden oder eine Wand hindurchgeführten Plastikrohrs bekannt. Im Falle eines Feuers schmilzt eine Sicherung des Verschlusses und das Plastikrohr erweicht schnell. Das Plastikrohr wird dann durch ein von einer Feder beaufschlagtes Blatt geschnitten bis der Durchgang des Plastikrohres vollständig verschlossen ist. Unter dem Einfluss der Hitze expandiert ein Element aus intumeszierendem Material und dichtet den Verschluss vollständig ab.

Der vorliegenden Erfindung liegt die Aufgabe zugrunde, eine Vorrichtung zur Abschottung von Leitungs- oder Kanalsträngen bereitzustellen, die die genannten Nachteile vermeidet, die leicht zu montieren ist und die ein zuverlässiges Abdrücken bzw. Verschliessen einer im Brandfall nachgiebigen Rohrleitung, wie z. B. einer Kunststoffrohrleitung, ermöglicht.

Erfindungsgemäss wird die Aufgabe dadurch gelöst, dass an zwei Längsseiten des Schneide- und Absperrelements Führungsabschnitte ausgebildet sind, an deren der Aufnahme zugewandten Enden jeweils ein Gegenanschlag angeordnet ist. Durch diese Massnahme wird die Führung des Schneide- und Absperrelements und die Wegbegrenzung desselben mit nur einem (ggf. doppelt vorhandenem) Element ermöglicht. Die Aufnahme ist dabei zu ihrer dem Schneide- und Absperrelement abgewandten Seite hin offen ausgebildet und an dem Gehäuse ist wenigstens ein Anschlag ausgebildet ist, der mit wenigstens einem Gegenanschlag am Schneide- und Absperrelement kooperiert und so die Verschlussstellung des Schneide- und Absperrelements definiert. Hierdurch kann die Vorrichtung auch an einen Leitungsstrang angelegt werden, der direkt benachbart zu einer weiteren Wand durch eine Wand oder Dekke hindurchgeführt ist. Der Leitungsstrang kann bei der Montage einfach in die offene Aufnahme der Vorrichtung eingeführt werden indem die Vorrichtung auf den Leitungsstrang zu bewegt wird. Ferner kann durch die definierte Verschlussstellung ein exaktes Verschliessen des Leitungsstrangs gewährleistet werden, da das Schneide- und Absperrelement nicht zu weit aus dem Gehäuse herausfahren kann und es so zu keiner Fehlfunktion kommt. Der Leitungsstrang wird dabei von zangenartigen Gehäusefortsätzen bereichsweise umgriffen wird, so dass eine gute Positionierung und Zentrierung der Vorrichtung erreicht werden kann. Der oder jeder Anschlag ist vorteilhaft an den Gehäusefortsätzen ausgebildet, wodurch eine grösstmögliche Führung des Schneide- und Absperrelementes erreicht wird.

Günstig ist es, wenn zwei Gehäusefortsätze vorgesehen sind, an deren freien Enden jeweils ein Anschlag angeordnet ist. Hierdurch wird eine exakte Wegbegrenzung des Schneide- und Absperrelements und eine längstmögliche Führung desselben ermöglicht. Ein Verkanten des Schneide- und Absperrelements in der Verschlussstellung wird hierdurch ebenfalls verhindert.

Von Vorteil kann es ferner sein, wenn das Gehäuse einen Gehäuseboden aufweist, der im montierten Zustand benachbart zu einer Wand angeordnet ist und der eine von der Aufnahme ausgehende Ausnehmung aufweist. Diese Ausnehmung fungiert bei ausgefahrenem Schneide- und Absperrelement als Öffnung zum Innenraum des Leitungsstrangs durch die intumeszierendes Material in den Leitungsstrang gelangen kann, um den Leitungsstrang besonders rauchgasdicht zu verschliessen.

Günstig kann es weiterhin sein, wenn das Schneide- und Absperrelement zwei entlang einer Stufe zueinander parallel versetzte Sperrabschnitte aufweist, wobei die Stufe im Wesentlichen senkrecht zur Ausfahrrichtung des Schneide- und Absperrelements verläuft. Einerseits kann die Stufe dabei günstigerweise sowohl den oder die Gegenanschläge ausbilden und als Schubaufnahmemittel fungieren an dem das Vortriebsmittel angreifen kann und andererseits kann die Stufe dazu dienen, das vorteilhaft als intumeszierende Masse ausgebildete Vortriebsmittel im Brandfall in den Leitungsstrang hineinzuleiten.

Vorteilhaft sind an dem Gehäuse benachbart zum Gehäuseboden Lüftungsschlitze ausgebildet, wodurch ein besserer Wärmeeintrag zwischen dem Gehäuse und einer Wand oder einer Decke an der die Vorrichtung montiert ist erreicht wird.

Weitere Vorteile und Massnahmen der Erfindung ergeben sich aus den Unteransprüchen, der nachfolgenden Beschreibung und den Zeichnungen. In den Zeichnungen ist die Erfindung in zwei Ausführungsbeispielen dargestellt.

Es zeigen:
- Fig. 1: eine perspektivische Ansicht einer erfindungsgemässen Vorrichtung zur Abschottung von Leitungssträngen in der Ausgangsstellung,
- Fig. 2: eine perspektivische Ansicht der Vorrichtung aus Fig. 1 bei abgenommenem Gehäuseboden,
- Fig. 3: einen Längsschnitt durch die an einer Wand neben einem Leitungsstrang montierte Vorrichtung aus Fig. 1 im Ausgangszustand,
- Fig. 4: die Vorrichtung gemäss Fig. 3 im Längsschnitt im ausgelösten Zustand,
- Fig. 5: eine perspektivische Ansicht einer weiteren erfindungsgemässen Vorrichtung zur Abschottung von Leitungssträngen in der Ausgangsstellung,
- Fig. 6: einen Längsschnitt durch die an einer Wand neben einem Leitungsstrang montierte Vorrichtung aus Fig. 5 im Ausgangszustand,
- Fig. 7: die Vorrichtung gemäss Fig. 6 im Längsschnitt im ausgelösten Zustand,
- Fig. 8: eine an einer Wand im Bereich einer Wandecke montierte Vorrichtung gemäss Fig. 1.

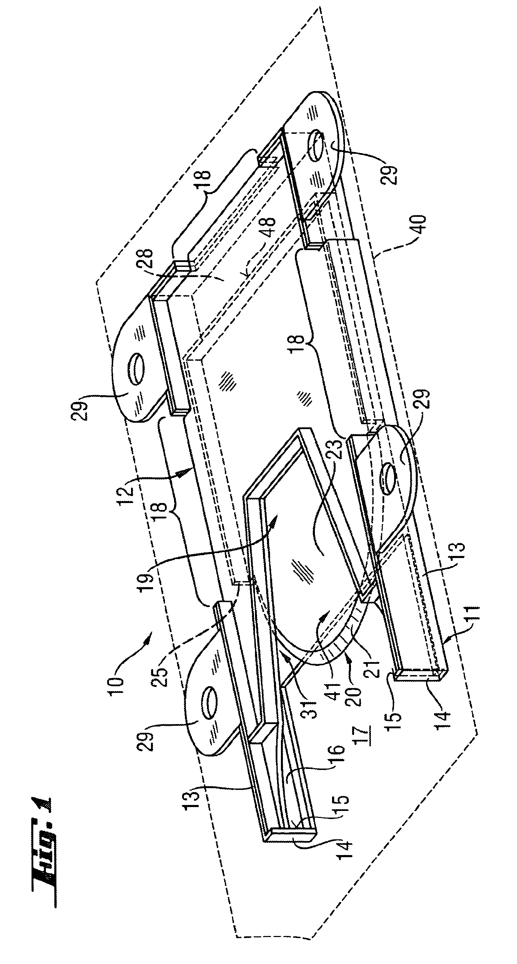

In den Figuren 1 bis 4 ist eine erfindungsgemässe Vorrichtung 10 zur Abschottung eines Leitungsstrangs 30, wie eines Kunststoffrohres oder eines Kabelkanals aus Kunststoff, wiedergegeben. Die Vorrichtung 10, die hier als Brandschutzschieber ausgebildet ist, weist ein Gehäuse 11 auf in dem ein als Schieberelement ausgebildetes Schneide- und Absperrelement 20 verschieblich geführt ist. Das Gehäuse 11 ist an seiner in montierter Lage einer Wand 50 zugewandten Seite mit einem Gehäuseboden 12 versehen. Der Gehäuseboden 12 kann dabei einteilig mit dem Gehäuse 11 ausgebildet sein oder ein separates Teil darstellen. An einem Ende des Gehäuses 11 ist eine Aufnahme 17 angeordnet, die parallel zu einer von dem Gehäuse 11 definierten Gehäuseebene 40 zu zwei Seiten offen ist. Diese Aufnahme 17 ist ferner noch zu einer in Längsrichtung des Gehäuses 11 liegenden und dem Schneide- und Absperrelement 20 abgewandten Seite hin offen und ist seitlich bereichsweise von zwei Gehäusefortsätzen 13 zangenartig umgeben. Der Innenraum des Gehäuses 11 ist zu der Aufnahme 17 hin mit einer Öffnung 31 versehen, durch die das Schneide- und Absperrelement 20 aus dem Gehäuse 11 heraus in die Aufnahme 17 einfahren kann.

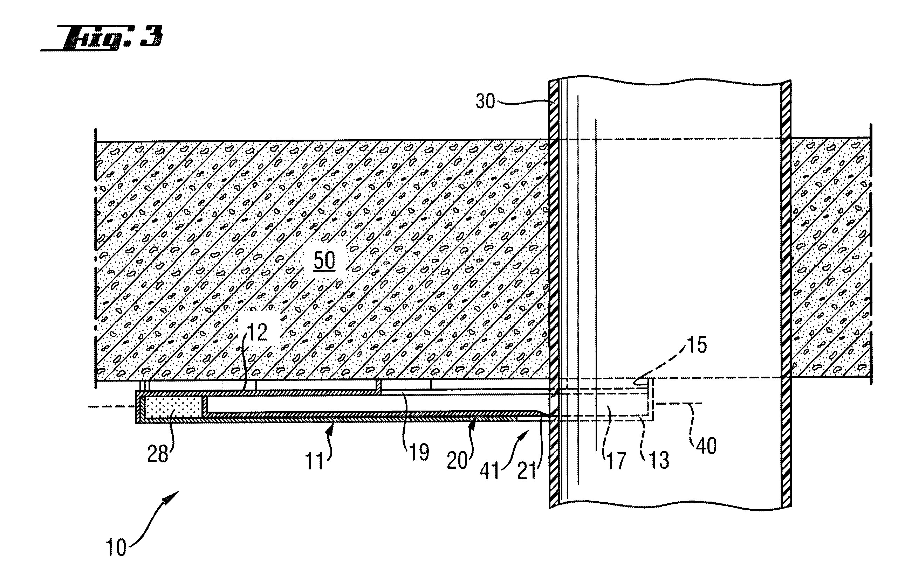

In der aus den Figuren 1 und 3 ersichtlichen Ausgangstellung 41 befindet sich das Schneide- und Absperrelement 20 im Wesentlichen im Gehäuse 11.

An seinem der Aufnahme 17 zugewandten Ende weist das Schneide- und Absperrelement 20 ein Schneidemittel 21, wie eine Schneide, auf. An den Längsseiten des Schneide- und Absperrelements 20 sind Führungsabschnitte 26 angeordnet, die hier als senkrecht von einem Sperrabschnitt 23 des Schneide- und Absperrelements 20 abragende Wandabschnitte ausgebildet sind. Diese Führungsabschnitte 26 sind in Führungen 16 des Gehäuses 11 geführt.

In dem der Öffnung 31 abgewandten Teil des Gehäuses 11 ist ein Vortriebsmittel 28, wie z. B. ein intumeszierendes Material oder ein Federelement, angeordnet, welches auf Hitze im Brandfall reagiert und dann expandiert. Das Schneide- und Absperrelement 20, welches an seinem dem Vortriebsmittel 28 zugewandten Ende ein Schubaufnahmemittel 48 aufweist, an dem das Vortriebsmittel 28 angreifen kann, ist über das expandierende Vortriebsmittel 28 aus dem Gehäuse 11 heraus bewegbar. Das Schubaufnahmemittel 48 ist dabei z. B. als senkrecht von dem Sperrabschnitt 23 abragender Wandabschnitt ausgebildet, der quer zur Längsrichtung des Schneide- und Absperrelements 20 verläuft.

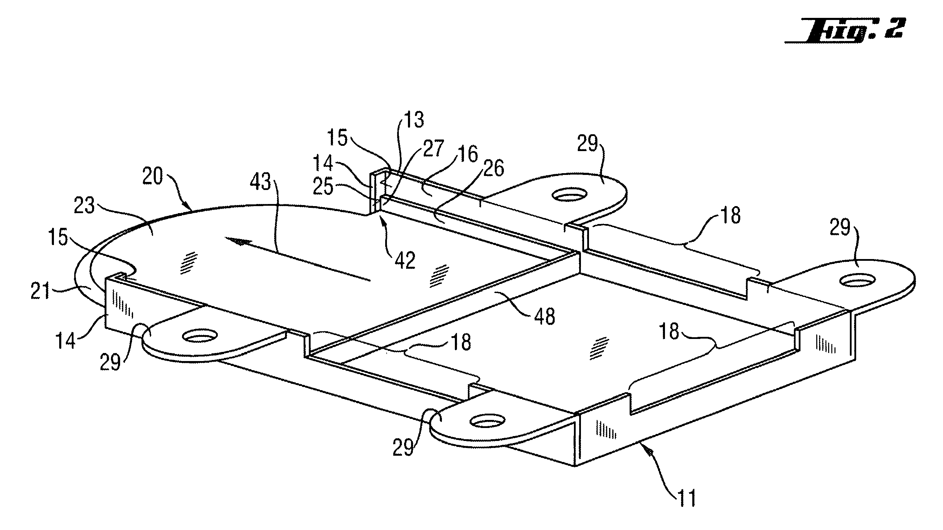

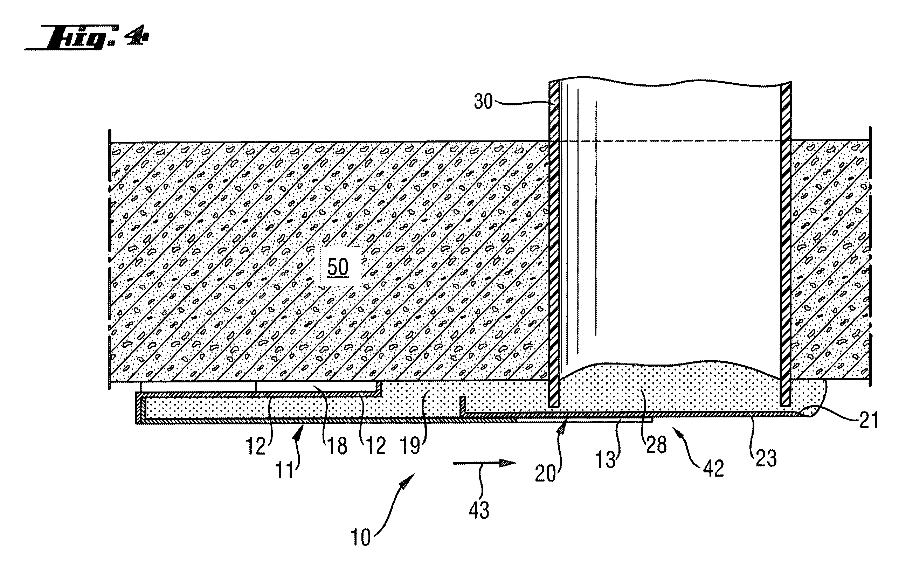

An freien Enden 14 der Gehäusefortsätze 13 sind Anschläge 15 angeordnet, die den Ausfahrweg des Schneide- und Absperrelements 20 begrenzen und eine Verschlussstellung 42 definieren, wie sie aus den Figuren 2 und 4 ersichtlich ist. An dem Schneide- und Absperrelement 20 sind Gegenanschläge 25 angeordnet, die in der Verschlussstellung 42 mit den Anschlägen 15 an den Gehäusefortsätzen 13 in Anlage kommen. Die Gegenanschläge 25 sind in dieser Ausführungsform der Erfindung an den Enden 27 der Führungsabschnitte 26 angeordnet. In der Verschlussstellung 42 ist das Schneide- und Absperrelement 20 maximal aus dem Gehäuse 11 ausgefahren und kann einen Leitungsstrang 30 vollständig absperren.

In den Figuren 3, 4 und 8 ist die Vorrichtung 10 an einer Wand 50 direkt neben einem als Kunststoffrohrleitung ausgebildeten Leitungsstrang 30 angeordnet. Dazu weist die Vorrichtung 10 Befestigungsabschnitte 29 auf, über die die Vorrichtung 10 mittels Befestigungselementen 59, wie z. B. Schrauben oder Nägeln, an der Wand 50 festgelegt werden kann. Der Leitungsstrang 30 füllt die Aufnahme 17 dabei im Wesentlichen aus und wird von den Gehäusefortsätzen 13 bereichsweise umfangen. Vorzugsweise umgibt das Gehäuse 11 mit seinen Gehäusefortsätzen 13 maximal ca. einen 180° Abschnitt bzw. die Hälfte der Kunststoffrohrleitung. Wie insbesondere aus den Figuren 3 und 4 ersichtlich ist, ist der Gehäuseboden 12 beabstandet von der Wand 50 und es befinden sich Lüftungsöffnungen 18 zwischen dem Gehäuseboden 12 und der Wand 50. Diese Lüftungsöffnungen 18 sorgen dafür, dass im Brandfall ein schneller Wärmeaustausch zwischen erhitzter Luft bzw. heissen Rauchgasen und der gesamten Vorrichtung 10 stattfinden kann. Hierdurch wird die Reaktionszeit der Vorrichtung 10 auf einen Brand verkürzt.

In Figur 4 wurde die Vorrichtung 10 durch ein Feuer ausgelöst und das Schneide- und Absperrelement 20 über das als intumeszierende Masse ausgebildete Vortriebsmittel 38 in Ausfahrrichtung 43 in seine Verschlussstellung 42 verfahren. Das Schneide- und Absperrmittel 20 hat dabei über das Schneidemittel 21 den durch die Hitze des Brandes weich gewordenen Leitungsstrang 30 durchschnitten und diesen mit seinem Sperrabschnitt 23 verschlossen. Über eine Ausnehmung 19 im Gehäuseboden 12 wurde der sich ausdehnenden intumeszierenden Masse ein Umströmen des Schubaufnahmemittels 48 und ein expandieren in den Innenraum des Leitungsstrangs 30 hinein ermöglicht. Hierdurch wird eine rauchgasfeste Absperrung des Leitungsstrangs 30 erreicht.

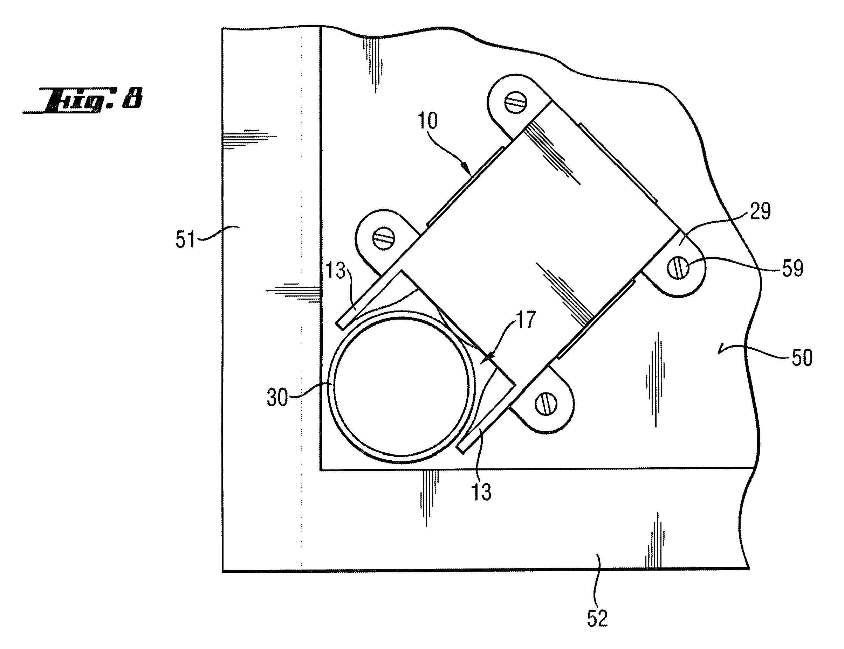

Wie aus Fig. 8 zu entnehmen ist, besteht ein Vorteil der erfindungsgemässen Vorrichtung 10 darin, dass sie auch bei Leitungssträngen 30 zum Einsatz kommen kann, die direkt an den Ecken von Räumen durch eine Wand 50 hindurchgeführt werden. In derartigen Ecken kann der Leitungsstrang 30 direkt neben weiteren Wänden 51 und/oder Decken 52 verlaufen, die ein vollständiges Umfangen des Leitungsstrangs 30 durch eine Montageschelle oder ähnliches verhindern. Der Leitungsstrang 30 kann in die dreiseitig offene Aufnahme 17 eingeführt werden und die Vorrichtung 10 direkt an der, von dem Leitungsstrang 30 durchsetzten Wand 50 festgelegt werden.

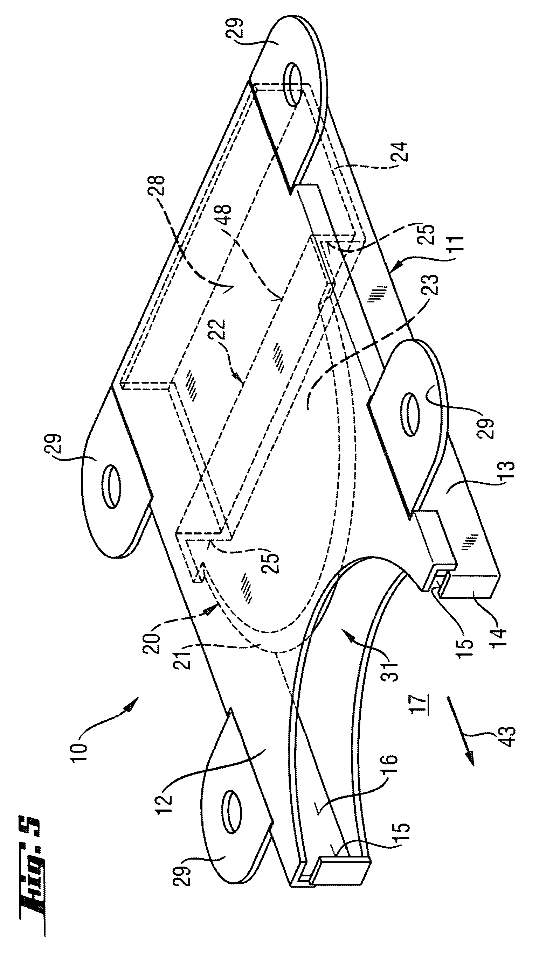

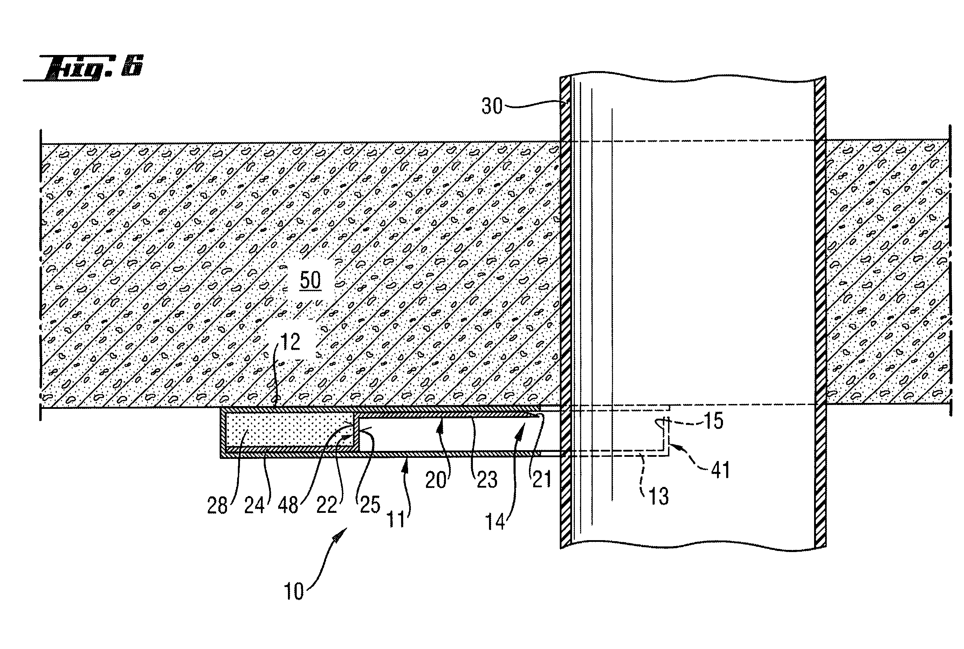

Die in den Figuren 5 bis 7 dargestellte Vorrichtung 10 unterscheidet sich von der vorhergehend dargestellten Vorrichtung im Wesentlichen dadurch, dass das Schneide- und Absperrelement 20 zwei Sperrabschnitte 23, 24 aufweist, die an einer als senkrecht zu den Sperrabschnitten 23, 24 verlaufender Wandabschnitt ausgebildeten Stufe 22 parallel zueinander versetzt sind. An den seitlichen Enden der Stufe 22 sind die Gegenanschläge 25 angeordnet, wie insbesondere aus Fig. 5 ersichtlich ist. Die Stufe 22 bildet aber ferner auch noch das Schubaufnahmemittel 48 aus, an dem das Vortriebsmittel 28 angreifen kann. Nicht vorhanden bei dieser Ausführungsform ist eine Ausnehmung in dem Gehäuseboden 12 und Lüftungsöffnungen in den Seitenteilen des Gehäuses 11.

Die Montage an einer Wand 50 erfolgt auch bei dieser Vorrichtung 10 wie bereits vorhergehend beschrieben über die Befestigungsabschnitte 29.

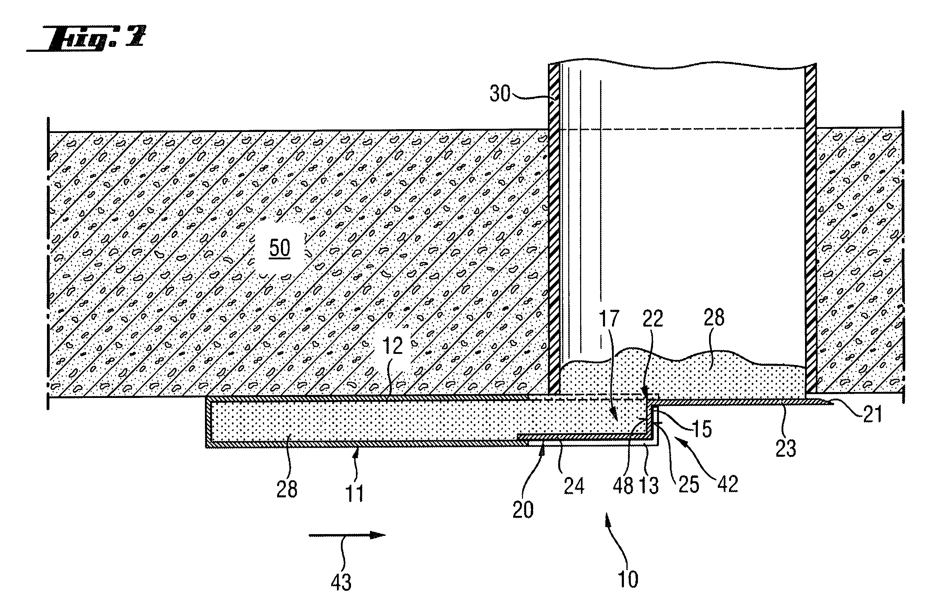

In Fig. 7 wurde die Vorrichtung 10 durch ein Feuer ausgelöst und das Schneide- und Absperrelement 20 über das als intumeszierende Masse ausgebildete Vortriebsmittel 38 in seine Verschlussstellung 42 verfahren, in der die Gegenanschläge 25 an der Stufe 22 an den Anschlägen 15 an den Gehäusefortsätzen 13 anliegen. Das Schneide- und Absperrmittel 20 hat dabei über das Schneidemittel 21 den durch die Hitze des Brandes weich gewordenen Leitungsstrang 30 durchtrennt und diesen mit seinen Sperrabschnitten 23, 24 verschlossen. Über die bereichsweise zum Inneren des Leitungsstrangs 30 hin offene Aufnahme 17 ist intumeszierende Masse in den Innenraum des Leitungsstrangs 30 entlang des Sperrabschnitts 23 hinein expandiert, wodurch auch hier eine rauchgasfeste Absperrung des Leitungsstrangs 30 erreicht wird.

## Patentansprüche

1. Vorrichtung zur Abschottung eines Leitungsstrangs (30), wie einer Rohrleitung oder eines Kabelkanals, im Brandfall, mit einem Gehäuse (11) und mit einer am Gehäuse (11) ausgebildeten Aufnahme (17) für den Leitungsstrang (30, wobei in dem Gehäuse (10) ein Schneide- und Absperrelement (20) angeordnet ist, weiches über ein Vortriebsmittel (28) aus dem Gehäuse (11) zur Aufnahme (17) hin in eine Verschlussstellung (42) verfahrbar ist, um den Leitungsstrang (30) im Brandfall abzukappen und zu verschliessen, und wobei an dem Gehäuse (11) Befestigungsabschnitte (29) zur Anordnung von Befestigungsmitteln vorgesehen sind, wobei
die Aufnahme (17) zu ihrer dem Schneide- und Absperrelement (20) abgewandten Seite hin offen ausgebildet ist und an dem Gehäuse (11) wenigstens ein Anschlag (15) ausgebildet ist, der mit wenigstens einem Gegenanschlag (25) am Schneide- und Absperrelement (20) kooperiert und die Verschlussstellung (42) des Schneide- und Absperrelements (20) definiert, und wobei
die Aufnahme (17) bereichsweise von Gehäusefortsätzen (13) eingefasst ist und der oder jeder Anschlag (15) an den Gehäusefortsätzen (13) ausgebildet ist, **dadurch gekennzeichnet, dass** an zwei Längsseiten des Schneide- und Absperrelements (20) Führungsabschnitte (26) ausgebildet sind, an deren der Aufnahme (17) zugewandten Enden (27) jeweils ein Gegenanschlag (25) angeordnet ist.

2. Vorrichtung nach Anspruch 1, **dadurch gekennzeichnet, dass** zwei Gehäusefortsätze (13) vorgesehen sind, an deren freien Enden (14) jeweils ein Anschlag (15) angeordnet ist.

3. Vorrichtung nach Anspruch 1, **dadurch gekennzeichnet, dass** das Gehäuse (11) einen Gehäuseboden (12) aufweist, der im montierten Zustand benachbart zu einer Wand (50) angeordnet ist und der eine von der Aufnahme (17) ausgehende Ausnehmung (19) aufweist.

4. Vorrichtung nach einem der Ansprüche 1 bis 3, **dadurch gekennzeichnet, dass** das Schneide- und Absperrelement (20) zwei entlang einer Stufe (22) zueinander parallel versetzte Sperrabschnitte (23, 24) aufweist, wobei die Stufe (22) im Wesentlichen senkrecht zur Ausfahrrichtung (43) des Schneide- und Absperrelements (20) verläuft.

5. Vorrichtung nach Anspruch 4. **dadurch gekennzeichnet, dass** die Stufe (22) den oder jeden Gegenanschlag (25) aufweist.

6. Vorrichtung nach einem der Ansprüche 1 bis 5, **dadurch gekennzeichnet, dass** das Vortriebsmittel (28) ein intumeszierendes Material ist.

7. Vorrichtung nach einem der Ansprüche 1 bis 3 oder 6, **dadurch gekennzeichnet, dass** an dem Gehäuse (11) benachbart zum Gehäuseboden (12) Lüftungsschlitze (18) ausgebildet sind.

## Claims

1. Device for isolating a conduit run (30), such as a pipe or a cable conduit, in the event of a fire, comprising a housing (11) and a receiver (17) provided on the housing (11) for the conduit run (30), wherein a cutting and shut-off element (20) is arranged in the housing (11) and can be moved out of the housing (11) towards the receiver (17) into a closing position (42) by a drive means (28) in order to cut off and close the conduit run (30) in the event of a fire, wherein fastening sections (29) are provided on the housing (11) for the arrangement of fastening means, wherein the receiver (17) is open towards its side remote from the cutting and shut-off element (20) and at least one stop (15) cooperating with at least one counter stop (25) on the cutting and shut-off element (20) and defining the closing position (42) of the cutting and shut-off element (20) is provided on the housing (11), and wherein housing projections (13) border the receiver (17) in some areas and the stop or each stop (15) is provided on the housing projections (13), **characterised in that** guide sections (26) are provided on two longitudinal sides of the cutting and shut-off element (20), respective counter stops (25) being arranged at the ends (27) of the guide sections directed towards the receiver (17).

2. Device according to claim 1, **characterised in that** two housing projections (13) are provided, respective stops (15) being arranged at their free ends (14).

3. Device according to claim 1, **characterised in that** the housing (11) has a bottom (12) arranged adjacent to a wall (50) in the mounted state and comprising a recess (19) departing from the receiver (17).

4. Device according to one of claims 1 to 3, **characterised in that** the cutting and shut-off element (20) has two parallel blocking sections (23, 24) offset relative to one another along a step (22), the step (22) extending essentially perpendicularly to the direction of outward movement (43) of the cutting and shut-off element (20).

5. Device according to claim 4, **characterised in that** the counter stop or each counter stop (25) is provided on the step (22).

6. Device according to one of claims 1 to 5, **characterised in that** the drive means (28) is an intumescent material.

7. Device according to one of claims 1 to 3 or claim 6, **characterised in that** ventilation slots (18) are provided on the housing (11) adjacent to the bottom (12) thereof.

## Revendications

1. Dispositif pour isoler un tronçon de conduite (30), tel qu'une tuyauterie ou un conduit de câbles, en cas d'incendie, comportant un boîtier (11) et un logement (17) formé sur le boîtier (11) pour le tronçon de conduite (30), dans lequel un élément de coupe et de blocage (20) est agencé dans le boîtier (11), lequel élément peut, en cas d'incendie, être amené dans une position d'obturation (42) au-dessus de moyens d'entraînement (28) depuis le boîtier (11) jusqu'au logement (17), afin de couper et d'obturer le tronçon de conduite (30), et dans lequel des éléments de fixation (29) sont prévus sur le boîtier (11) pour agencer des moyens de fixation, dans lequel le logement (17) est formé ouvert sur son côté opposé à l'élément de coupe et de blocage (20) et au moins une butée (15) est formée sur le boîtier (11), ladite butée coopérant avec au moins une contre-butée (25) sur l'élément de coupe et de blocage (20) et définissant la position d'obturation (42) de l'élément de coupe et de blocage (20), et dans lequel le logement (17) est bordé d'extensions de boîtier (13) dans certaines zones et la ou chaque butée (15) est formée sur les extensions de boîtier (13),
**caractérisé en ce que** des éléments de guidage (26) sont formés sur deux côtés longitudinaux de l'élément de coupe et de blocage (20), une contre-butée (25) étant respectivement agencée sur des extrémités (27) desdits tronçons dirigées vers le logement (17).

2. Dispositif selon la revendication 1, **caractérisé en ce que** deux extensions de boîtier (13) sont prévues, une butée (15) étant respectivement agencée sur des extrémités libres (14) desdites extensions.

3. Dispositif selon la revendication 1, **caractérisé en ce que** le boîtier (11) comporte un fond de boîtier (12) qui, à l'état monté, est agencé adjacent à une paroi (50) et qui comporte une ouverture (19) débutant à partir du logement (17).

4. Dispositif selon l'une quelconque des revendications 1 à 3, **caractérisé en ce que** l'élément de coupe et de blocage (20) comporte deux éléments de blocage (23, 24) parallèlement décalés l'un par rapport à l'autre le long d'un gradin (22), dans lequel le gradin (22) s'étend de manière sensiblement perpendiculaire à la direction de sortie (43) de l'élément de coupe et de blocage (20).

5. Dispositif selon la revendication 4, **caractérisé en ce que** le gradin (22) comporte la ou chaque contre-butée (25).

6. Dispositif selon l'une quelconque des revendications 1 à 5, **caractérisé en ce que** les moyens d'entraînement (28) comportent un matériau intumescent.

7. Dispositif selon l'une quelconque des revendications 1 à 3 ou 6, **caractérisé en ce que** des fentes d'aération (18) adjacentes au fond de boîtier (12) sont formées sur le boîtier (11).
